# FASCICULE DE BREVET EUROPEEN

(11) **EP 1 647 955 B1**
(45) Date de publication et mention de la délivrance du brevet: **11.06.2008**
(21) Numéro de dépôt: 05292036.0
(22) Date de dépôt: 30.09.2005
(51) Int. Cl.: G08B 13/193

(54) **Dispositif de détection et/ou d'émission de rayonnements à miroirs, en particulier de rayonnements infrarouges**
Vorrichtung zur Erfassung und/oder Emission von Strahlung mit Spiegeln, insbesondere Infrarotstrahlung
Mirror-based device for the detection and/or emission of radiation, in particular infrared radiation

(30) Priorité: 14.10.2004 FR 0410840
(43) Date de publication de la demande: 19.04.2006
(73) Titulaire: ATRAL, 38920 Crolles (FR)
(72) Inventeur: Martinsons, Christophe, 38660 Le Touvet (FR); Porcheron, Thierry, 38530 Chapareillan (FR)
(74) Mandataire: Dossmann, Gérard

(56) Documents cités:
- US-A- 4 271 360
- US-A- 4 514 631
- US-A- 4 709 151
- US-A- 4 709 152
- US-A- 4 873 469
- US-B1- 6 348 691

## Description

La présente invention concerne le domaine des dispositifs de détection et/ou d'émission de rayonnements, en particulier de rayonnements infrarouges.

En particulier dans le domaine de la domotique, et notamment dans le domaine des systèmes d'alarme ou des systèmes de commande d'appareillages, on utilise des dispositifs de détection d'intrusion ou de présence qui comprennent un élément sensible aux rayonnements infrarouges et un système optique pour focaliser des champs répartis de vision vers cet élément.

Dans certains dispositifs de détection adaptés pour constituer des plafonniers de détection, le système optique comprend des miroirs de détermination et de focalisation de champs de vision.

Le document EP-A-069782 décrit un plafonnier à miroirs dans lequel le détecteur est obligatoirement situé entre les miroirs du haut et les miroirs du bas. Il en résulte que ce plafonnier présente un encombrement notamment en hauteur important. Les champs de vision lointaine correspondent à des miroirs situés sur une couronne de plus faible diamètre. Par conséquent, le nombre de champs de vision est limité et/ou l'énergie collectée dans chaque champ de vision est faible.

Le document US-A-5089704 décrit des plafonniers à trois couronnes de miroirs et une seule réflexion sur des portions de miroirs paraboliques qui servent de renvoi et de focalisation. Les rayons arrivent en incidence très oblique sur les miroirs, ce qui entraîne des aberrations optiques importantes et des pertes importantes dues aux défauts de surface. Les couronnes de miroirs doivent être éloignées selon l'axe optique pour ne pas se masquer les unes les autres, ce qui engendre un encombrement important notamment en largeur.

Le document US-A-4707604 décrit un plafonnier à miroirs dans lequel le détecteur est aussi décalé vers le bas par rapport aux miroirs du haut. Le miroir du bas est obligatoirement scindé en deux portions décalées verticalement. De ce fait, ces champs de vision correspondent à une distance focale plus longue. Ce plafonnier présente obligatoirement un encombrement important notamment en hauteur.

Les documents US-A-4709151, US-A-4709152, US-A-4873469 et US-A-4514631 décrivent des dispositifs de détection comprenant des couples de miroirs de déflection, à champs de vision angulairement restreints et de structures complexes.

La présente invention a pour but de proposer un dispositif de détection et/ou d'émission de rayonnements permettant de mieux équilibrer les énergies susceptibles de transiter dans des champs de vision et/ou d'émission de rayonnements de portées différentes.

La présente invention a pour but de proposer un dispositif de détection et/ou d'émission de rayonnements de structure plus simple à fabriquer et de plus grande compacité.

La présente invention a pour objet un dispositif de détection et/ou d'émission de rayonnements, en particulier de rayonnements infrarouges, qui comprend un élément de détection et/ou d'émission présentant un axe optique principal et un système de miroirs pour dévier les rayonnements entre des champs de vision et/ou d'éclairage et ledit élément via des couples de miroirs comprenant un premier miroir et un second miroir, les premiers miroirs étant optiquement placés respectivement entre les champs de vision et/ou d'éclairage associés et les seconds miroirs associés et les seconds miroirs étant optiquement placés respectivement entre l'élément de détection et/ou d'émission et les premiers miroirs associés, dans lequel à au moins un premier champ de vision et/ou d'éclairage qui traverse au moins un plan de référence contenant ledit axe optique et perpendiculaire au plan médian de ce champ de vision et à au moins un second champ de vision et/ou d'éclairage qui ne traverse pas ce plan de référence, sont respectivement associés au moins un premier couple de miroirs et au moins un second couple de miroirs, ledit premier couple de miroirs et ledit second couple de miroirs étant placés de part et d'autre dudit plan de référence et de telle sorte que ledit premier champ de vision et/ou d'éclairage et ledit second champ de vision et/ou d'éclairage passent entre les miroirs du second couple de miroirs.

Selon la présente invention, le système optique comprend une couronne intérieure à facettes constituant les premiers miroirs de couples de miroirs correspondant à des premiers champs de vision et/ou d'éclairage, une couronne extérieure à facettes constituant les premiers miroirs de couples de miroirs correspondant à des seconds champs de vision et/ou d'éclairage et une couronne intermédiaire à facettes constituant les premiers miroirs de couples de miroirs placés respectivement du même côté dudit plan de référence que ledit premier couple de miroirs et correspondant à des troisièmes champs de vision et/ou d'éclairage qui traversent respectivement ledit plan de référence ; lesdites couronnes étant placées à la périphérie dudit élément de détection et/ou d'émission.

Selon la présente invention, le système optique comprend une coupelle placée en avant dudit élément de détection et/ou d'émission et desdites couronnes et constituant les seconds miroirs desdits couples de miroirs, cette coupelle présentant une ouverture centrale formée en face dudit élément de détection et/ou d'émission et traversée par l'axe optique principal de cet élément, que lesdits premiers et second champs de vision et/ou d'éclairage passent à l'extérieur de ladite coupelle et les troisièmes champs de vision et/ou d'éclairage passent au travers de ladite ouverture centrale (12) de ladite coupelle.

Selon la présente invention, les zones de déflection de la face concave réfléchissante de ladite coupelle correspondant aux seconds miroirs desdits premiers, seconds et troisièmes couples de miroirs sont respectivement annulaires, la zone annulaire correspondant aux troisièmes couples de miroirs s'étendant entre une zone annulaire intérieure correspondant aux premiers couples de miroirs et une zone annulaire extérieure correspondant aux deuxièmes couples de miroirs.

Selon l'invention, lesdits premiers et troisièmes champs de vision et/ou d'éclairage passent de préférence devant ledit élément de détection et/ou d'émission.

Selon l'invention, lesdits couples de miroirs présentent de préférence des plans de symétrie contenant ledit axe optique.

Selon l'invention, lesdits premiers, seconds et troisièmes couples de miroirs sont de préférence placés de telle sorte que les champs de vision et/ou d'éclairage correspondants présentent des angles d'inclinaison différents par rapport audit axe optique.

Selon l'invention, lesdits premiers couples de miroirs et lesdits troisièmes couples de miroirs sont de préférence placés de telle sorte que les angles d'inclinaison desdits premiers champs de vision et/ou d'éclairage par rapport respectivement audit plan de référence sont plus grands que ceux desdits troisièmes champs de vision et/ou d'éclairage.

Selon la présente invention, lesdites couronnes sont de préférence adjacentes et forment une pièce unique.

Selon l'invention, lesdites couronnes sont de préférence fixées sur une face avant d'une plaque portant ledit élément de détection et/ou d'émission.

Selon l'invention, lesdites couronnes présentent des secteurs à facettes, les secteurs à facettes des première et troisième couronnes étant adjacents et le secteur à facettes de la deuxième couronne leur étant diamétralement opposé, de façon à obtenir des champs de vision et/ou d'éclairage s'étendant entre deux plans contenant ledit axe optique principal dudit élément de détection et/ou d'émission.

Selon l'invention, ladite coupelle comprend des couronnes de facettes constituant lesdits seconds miroirs desdits couples de miroirs.

Selon l'invention, lesdites couples de miroirs sont adaptés pour focaliser des champs de vision vers un élément de détection de rayonnement infrarouge.

Selon l'invention, un écran peut avantageusement être placé en avant du système de miroirs, cet écran présentant des ouvertures traversées par lesdits champs de vision et/ou d'éclairage.

Selon l'invention, ledit écran est de préférence en forme de dôme, son bord périphérique étant fixé sur une plaque portant ledit élément de détection et/ou d'émission.

Selon l'invention, au moins une pastille-écran amovible peut avantageusement être adaptée pour être installée sur ledit écran de façon à obstruer sélectivement au moins une desdites ouvertures de cet écran.

La présente invention sera mieux comprise à l'étude d'un dispositif de détection de rayonnement, en particulier de rayonnement infrarouge, constituant un plafonnier de détection, décrit à titre d'exemple non limitatif et illustré par le dessin sur lequel :
- la figure 1 représente une coupe médiane verticale d'un plafonnier selon la présente invention, montrant un champ de vision ;
- la figure 2 représente une coupe dudit plafonnier montrant un second champ de vision ;
- la figure 3 représente une coupe dudit plafonnier montrant un troisième champ de vision ;
- la figure 4 représente une coupe dudit plafonnier montrant un quatrième champ de vision ;
- la figure 5 représente une vue par le dessus des différents champs de vision dudit plafonnier ;
- la figure 6 représente une vue latérale médiane des champs de vision dudit plafonnier ;
- la figure 7 représente une vue en perspective agrandie d'un organe à miroirs dudit plafonnier ;
- la figure 8 représente une vue en perspective d'un écran dudit plafonnier et de pastilles-écrans ;
- et la figure 9 représente une coupe locale de l'écran dudit plafonnier, équipé de pastilles-écrans.

Le plafonnier de détection 1 représenté sur les figures comprend un support 2 équipé de moyens connus, non représentés, en vue de sa fixation au plafond d'un local.

Le support 2 présente une face horizontale inférieure 3, entourant un évidement 3a, contre laquelle est fixée, par tous moyens connus non représentés, une plaque de circuits imprimés 4 qui porte sur sa face supérieure un circuit électronique dont les composants 4a rentrent dans l'évidement 3a.

Au centre de la face intérieure de la plaque 4 est fixé un élément de détection 5, constitué par exemple par un capteur de rayonnement infrarouge, relié audit circuit électronique, cet élément de détection présentant un axe optique principal 6 vertical et dirigé vers le bas.

Le plafonnier de détection 1 comprend en outre un système de miroirs 7 pour focaliser les rayonnements présents dans des champs de vision vers l'élément de détection 5.

Le système de miroirs 7 comprend un organe annulaire 8 à facettes constituant des premiers miroirs, disposé autour de l'élément de détection 5 et fixé sur la face inférieure de la plaque 4, ainsi qu'une coupelle circulaire 9 disposée à distance et en dessous de l'élément de détection 5 et de l'organe 8 à facettes et portée par la plaque 4 par exemple, selon des montages connus non représentés, par l'intermédiaire de trois pieds verticaux 10 répartis de façon à ne pas couper les champs de vision que l'on décrira plus loin.

La coupelle 9 présente une face supérieure concave réfléchissante 11 tournée vers le haut, cette face 11 étant de préférence une portion au sommet d'un paraboloïde de révolution ou une calotte d'une sphère, axée selon l'axe optique 6.

La coupelle 9 présente une ouverture centrale 12 circulaire placée en face de l'élément de détection 5 et centrée selon l'axe optique 6.

La coupelle 9 peut être en une matière plastique thermoformée ou injectée, dont la face 11 est traitée ou recouverte de façon à être réfléchissante pour le rayonnement considéré.

L'organe à facettes 8 du système à miroirs 7 comprend une couronne intérieure 13 qui est constituée par une portion annulaire d'un polyèdre régulier dont l'axe est placé selon l'axe optique 6 et qui est ouvert vers le bas, de telle sorte que cette couronne intérieure 13 présente une multiplicité de facettes adjacentes 14 constituant des premiers miroirs plats exposés vers le bas et vers l'axe optique 6.

L'organe à facettes 8 du système à miroirs 7 comprend également une couronne extérieure 15 qui est constituée par une portion annulaire d'un polyèdre régulier dont l'axe est placé selon l'axe optique 6 et qui est ouvert vers le haut, de telle sorte que cette couronne extérieure 15 présente une multiplicité de facettes adjacentes 16 constituant des premiers miroirs plats exposés vers le bas et à l'opposé de l'axe optique 6.

La partie à facettes 8 du système à miroir 7 comprend en outre une couronne intermédiaire 17 constituée par une portion annulaire d'un polyèdre régulier dont l'axe est placé selon l'axe optique 6 et qui est ouvert vers le bas, de telle sorte que cette couronne intermédiaire 17 présente une multiplicité de facettes adjacentes 18 constituant des premiers miroirs plats exposés vers le bas et vers l'axe optique 6.

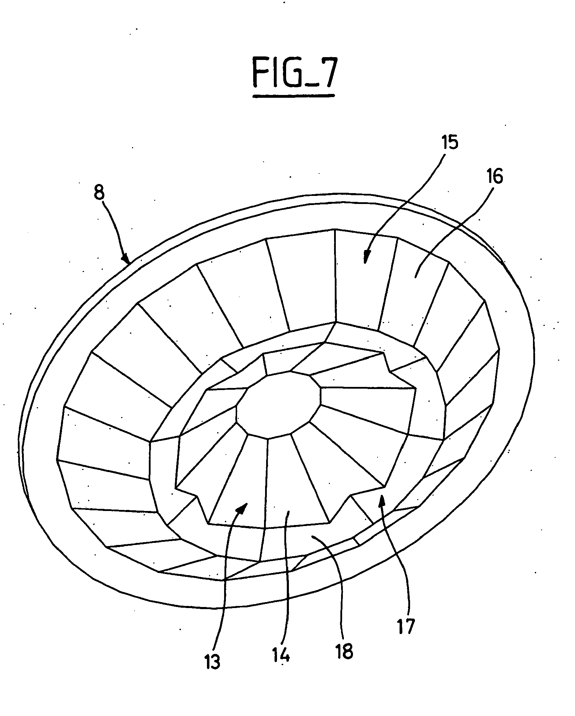

Dans un exemple préféré de réalisation, représenté en particulier sur la figure 7, les couronnes à facettes 13, 15 et 17 constituent une pièce unique telle que les bords intérieurs et extérieurs des facettes 18 de la couronne intermédiaire 17 sont respectivement adjacents aux bords extérieurs des facettes 14 de la première couronne 13 et aux bords intérieurs des facettes 16 de la couronne extérieure 15. Ainsi, l'organe 8 à facettes du système à miroir 7 peut être réalisé en une matière plastique thermoformée ou injectée, dont les facettes 14, 16 et 18 seraient recouvertes ou traitées de façon à constituer des miroirs plats.

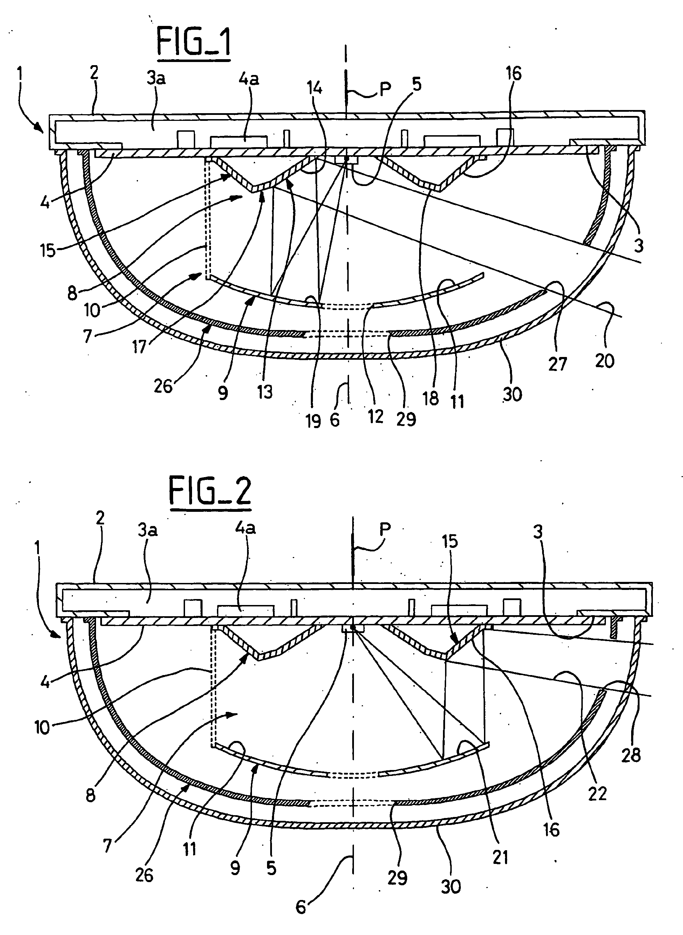

Comme le montre en particulier la figure 1, les premiers miroirs 14 de la couronne intérieure 13 constituent avec des zones de déflection intérieures 19 de la surface réfléchissante 11 de la coupelle 9, réparties sur une partie annulaire intérieure adjacente ou proche de son ouverture 12 et constituant des seconds miroirs, une multiplicité de couples de miroirs adaptés pour focaliser des premiers champs de vision 20 vers l'élément de détection 5, ces champs étant déviés par les premiers miroirs 14 et déviés et focalisés par les seconds miroirs 19. De préférence, les zones de déflection 19 sont approximativement adjacentes.

Chaque champ de vision 20 passe entre la partie de l'organe à facettes 8 qui est opposée au miroir 14 associé et le bord périphérique de la coupelle réfléchissante 9, en passant au travers d'un plan de référence contenant l'axe optique 6 et perpendiculaire au plan médian du champ de vision 20 contenant aussi l'axe 6, le couple de miroirs constitué par la facette 14 et la zone 19 correspondante étant d'un côté dudit plan de référence.

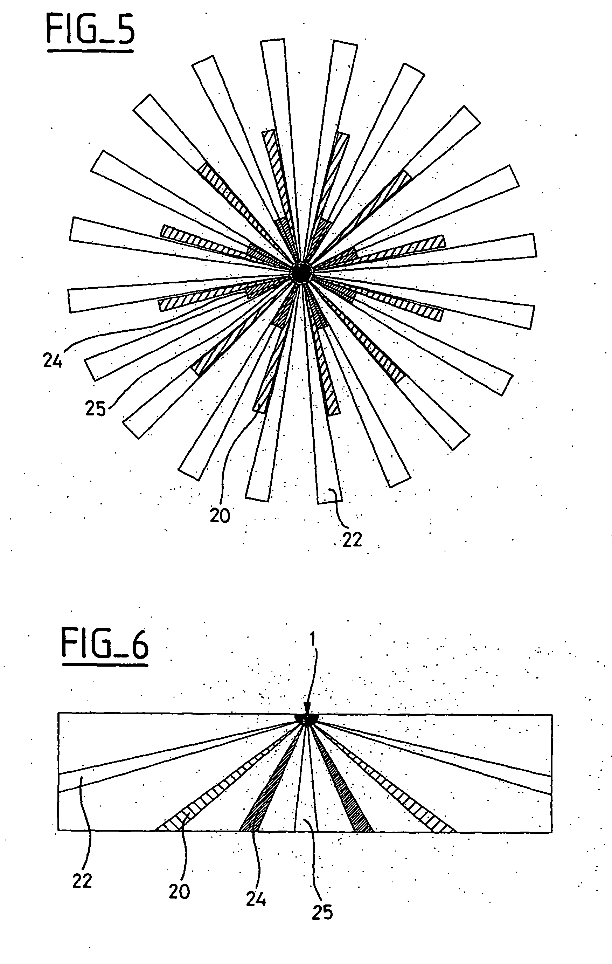

Comme le montrent les figures 5 et 6, les champs de vision 20 rayonnent de façon régulière autour de l'axe optique 6 et présentent le même angle d'incidence sur un sol horizontal. Ce sont des champs de vision de moyenne portée.

Comme le montre en particulier la figure 2, les premiers miroirs 16 de la couronne extérieure 15 constituent avec des zones de déflection extérieures 21 de la surface réfléchissante 11 de la coupelle 9, réparties sur une partie annulaire extérieure adjacente ou proche de son bord périphérique et constituant des seconds miroirs, une multiplicité de couples de miroirs adaptés pour focaliser des seconds champs de vision 22 vers l'élément de détection 5, ces champs étant déviés par les premiers miroirs 16 et déviés et focalisés par les seconds miroirs 21. De préférence, les zones de déflection 21 sont approximativement adjacentes. L'ensemble des zones de déflection 19 et l'ensemble des zones de déflection 21 sont annulairement espacés.

Chaque champ de vision 22 atteint le miroir 15 correspondant sans passer au travers d'un plan de référence contenant l'axe optique 6 et perpendiculaire au plan médian du champ de vision 22 contenant aussi l'axe 6, le couple de miroirs constitué par la facette 16 et la zone 21 correspondante étant du même côté dudit plan de référence.

Comme le montrent les figures 5 et 6, les champs de vision 22 rayonnent de façon régulière autour de l'axe optique 6 et présentent le même angle d'incidence au sol. Ce sont des champs de vision de portée longue. L'angle d'incidence des champs de vision 20 sur un sol horizontal est donc plus grand que l'angle d'incidence des champs de vision 22.

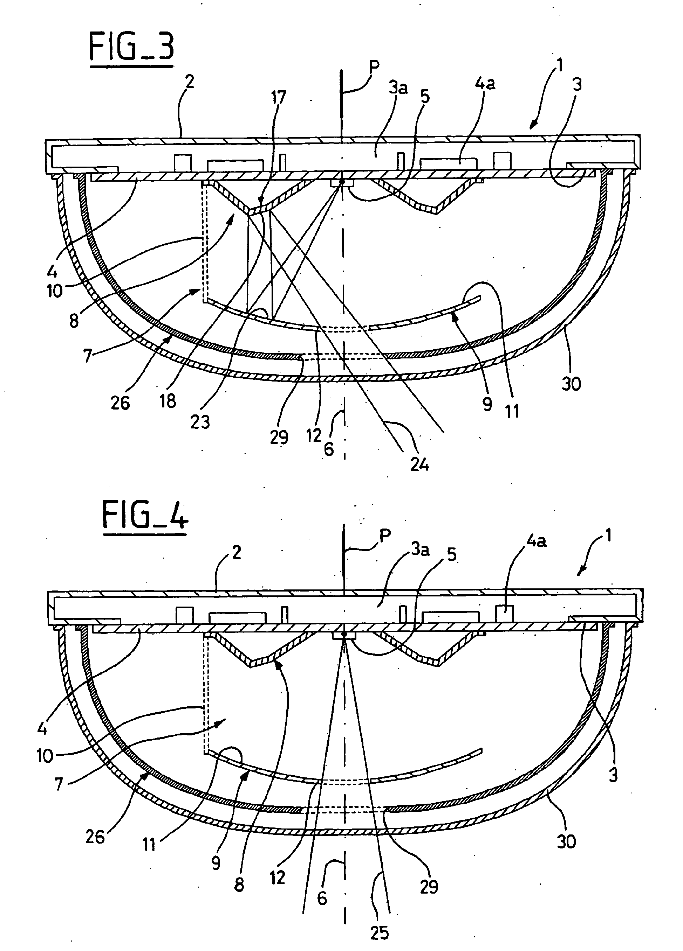

Comme le montre en particulier la figure 3, les premiers miroirs 18 de la couronne intermédiaire 17 constituent avec des zones de déflection intermédiaires 23 de la surface réfléchissante 11 de la coupelle 9, réparties sur une partie annulaire intermédiaire de cette surface s'étendant entre les parties annulaires intérieure et extérieure correspondant aux zones de déflection intérieures et extérieures 19 et 21 et constituant des seconds miroirs, une multiplicité de couples de miroirs adaptés pour focaliser des troisièmes champs de vision 24 vers l'élément de détection 5, ces champs étant déviés par les premiers miroirs 18 et déviés et focalisés par les seconds miroirs 23. De préférence, les zones de déflection 23 sont approximativement adjacentes.

L'ensemble des zones de déflection 23 s'étend annulairement entre l'ensemble des zones de déflection 19 et l'ensemble des zones de déflection 21.

Chaque champ de vision 24 passe au travers de l'ouverture centrale 12 de la coupelle 9 et traverse un plan de référence contenant l'axe optique 6 et perpendiculaire au plan médian du champ de vision 24 contenant aussi l'axe 6, le couple de miroirs constitué par la facette 18 et la zone 23 correspondante étant d'un côté dudit plan de référence.

Comme le montrent les figures 5 et 6, les champs de vision 24 rayonnent de façon régulière autour de l'axe optique 6 et présentent le même angle d'incidence au sol. Ce sont des champs de vision de portée courte. L'angle d'incidence des champs de vision 24 sur un sol horizontal est donc plus grand que l'angle d'incidence des champs de vision 20.

Comme le montre en particulier la figure 4, il existe aussi un champ de vision 25 dont l'axe correspond à l'axe optique 6. Ce champ vertical de vision 25 atteint directement l'élément de détection 5 au travers de l'ouverture 12 de la coupelle 9.

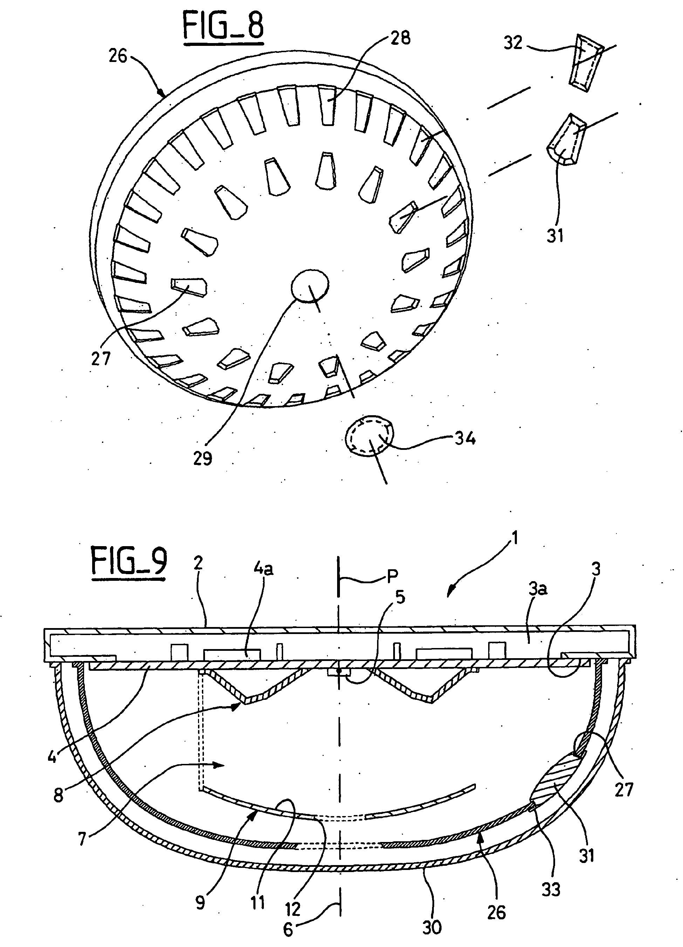

Comme le montre plus précisément la figure 8, le plafonnier de détection 1 comprend en outre un écran 26 en forme de dôme, qui enveloppe à distance la coupelle 9 et dont le bord périphérique est fixé par tous moyens connus appropriés au support 2, à distance des bords de la plaque 3.

L'écran 26 est de préférence en une matière opaque aux rayonnements détectés par l'élément de détection 5 et présente une première série annulaire d'ouvertures 27 traversées par les premiers champs de vision 20, une seconde série annulaire d'ouvertures 28 traversées par les seconds champs de vision 22 et une ouverture centrale 29 pour laisser passer les troisièmes champs de vision 24 et le champ vertical de vision 25.

Il résulte de ce qui précède que les champs déviés sensiblement verticaux s'établissant entre les couples intermédiaires de miroirs 18 et 23 s'étendent annulairement entre les champs déviés intérieurs sensiblement verticaux s'établissant entre les couples intérieurs de miroirs 14 et 19 et les champs déviés extérieurs sensiblement verticaux s'établissant entre les couples intérieurs de miroirs 16 et 21.

Le plafonnier de détection 1 comprend en outre un couvercle 30 transparent aux rayonnements détectés par l'élément de détection 5. Ce couvercle 30 est en forme de dôme et enveloppe à distance l'écran 26. Son bord est fixé sur la périphérie du support 2 par tous moyens connus adaptés.

Comme le montrent les figures 8 et 9, le plafonnier de détection 1 comprend également des jeux de pastilles-écrans 31 et 32 qui sont opaques aux rayonnements détectés par l'élément de détection 5 et qui sont respectivement adaptées pour être montées, de préférence de façon amovible, sur l'écran 26 pour obstruer respectivement au moins une ouverture 27 et au moins une ouverture 28.

Le plafonnier de détection 1 peut aussi comprendre une pastille-écran 34 pour obstruer l'ouverture centrale 29 de l'écran 26.

Par exemple, les pastilles-écrans 31, 32 et 34 sont respectivement engageables dans les ouvertures 27, 28 et 29 de l'écran 26 et présentent des épaulements périphériques d'arrêt 33, leur maintien pouvant être assuré par un montage à force ou par tous moyens de clipsage connus adaptés.

Les pastilles-écrans 31 et 32 peuvent avantageusement être utilisées pour sélectionner des champs de vision 20 de moyenne portée et des champs de vision 21 de grande portée, qu'un utilisateur souhaiterait supprimer afin notamment de réduire la zone de détection couverte par le plafonnier ou d'éviter des détections fausses ou inutiles dues par exemple à des appareils rayonnants tels que des radiateurs de chauffage. En outre, la pastille-écran 34 peut être utilisée pour supprimer les champs de vision 24 de courte portée et le champ vertical de vision 25..

Pour effectuer la sélection ci-dessus, il suffit que l'utilisateur démonte le couvercle 30, installe les pastilles-écrans sur les ouvertures de l'écran 26 qu'il souhaite obstruer afin que les champs de vision correspondants ne puissent atteindre le détecteur 5, puis remonte le couvercle 30.

Selon une variante possible de réalisation, le plafonnier de détection 1 pourrait présenter les caractéristiques suivantes.

Le champ de vision 20 de portée moyenne pourrait présenter une inclinaison sensiblement égale à 25°. On pourrait prévoir une couronne 13 à douze facettes 14 et ainsi douze champs de vision 20. L'inclinaison des facettes 14 pourrait être d'environ 33°. La surface des facettes 14 pourrait être d'environ 68 mm². L'angle d'incidence des rayons déviés vers l'élément de détection 5, issus des zones 19 et correspondant au champ de vision 20, pourrait être égale à environ 30°.

Le champ de vision 22 de portée lointaine pourrait présenter une inclinaison sensiblement égale à 10°. On pourrait prévoir une couronne 15 à vingt facettes 16 et ainsi vingt champs de vision 22. L'inclinaison des facettes 16 pourrait être d'environ 40°. La surface des facettes 14 pourrait être d'environ 105 mm². L'angle d'incidence des rayons déviés vers l'élément de détection 5, issus des zones 21 et correspondant au champ de vision 22, pourrait être égale à environ 40°.

Le champ de vision 24 de portée courte pourrait présenter une inclinaison sensiblement égale à 55°. On pourrait prévoir une couronne 17 à huit facettes 18 et ainsi huit champs de vision 22. L'inclinaison des facettes 18 pourrait être d'environ 18°. La surface des facettes 14 pourrait être d'environ 66 mm². L'angle d'incidence des rayons déviés vers l'élément de détection 5, issus des zones 21 et correspondant au champ de vision 24, pourrait être égale à environ 17°.

La coupelle 9 pourrait présenter un diamètre extérieur égal à environ 64 mm, son ouverture centrale 12 pourrait présenter un diamètre extérieur égal à environ 12 mm et sa surface réfléchissante pourrait être un paraboloïde dont la formule pourrait être z=(x²+y²)/4f, dans laquelle f est la longueur focale, cette dernière pouvant être égale à environ 35 mm.

La couronne intérieure 13 pourrait présenter un diamètre moyen d'environ 24 mm. La couronne extérieure 15 pourrait présenter un diamètre moyen d'environ 52 mm. La couronne intermédiaire 17 pourrait présenter un diamètre moyen d'environ 38 mm.

En ce qui concerne l'écran 26, les ouvertures 27 pourraient présenter une surface égale à environ 230 mm², les ouvertures 28 pourraient présenter une surface égale à environ 175 mm² et l'ouverture centrale 29 pourrait présenter un diamètre de 15 mm.

La présente invention ne se limite pas à l'exemple ci-dessus décrit.

En particulier, l'élément de détection 5 pourrait être sensible à un autre rayonnement qu'un rayonnement infrarouge. Il pourrait être remplacé par un élément d'émission d'un rayonnement en particulier lumineux. Il pourrait aussi être remplacé par un élément combinant une émission et une réception pour en particulier mettre en oeuvre l'effet Doppler.

Par ailleurs, le plafonnier de détection pourrait être réduit de façon à couvrir une zone au sol réduite. Pour cela, selon une variante, l'organe à facettes 8 pourrait comprendre des portions circonférencielles des couronnes à facettes 13, 15 et 17, les portions des couronnes 13 et 17 et les portions de la couronne 15 pouvant être diamétralement opposées. Selon une autre variante, les couronnes 13, 15 et 17 pourraient comprendre des secteurs à facettes adjacentes, les secteurs à facettes des couronnes 13 et 17 et les secteurs à facettes de la couronne 15 pouvant être diamétralement opposés. Ainsi, les champs de vision 20, 22 et 24 pourraient être limités par exemple à un secteur angulaire du sol, par exemple d'environ 180°.

La présente invention ne se limite pas aux exemples ci-dessus décrits.

Le système de miroirs 7 pourrait notamment présenter des configurations différentes.

En particulier, l'organe à miroirs 8 pourrait présenter des couronnes à facettes concaves de formes paraboloïdales ou ellipsoïdales, auxquelles seraient associées une coupelle 9 présentant des couronnes à facettes plates correspondantes, ou des couronnes à facettes concaves ou convexes correspondantes de formes paraboloïdales, hyperboloïdales ou ellipsoïdales.

Dans ce cas, la coupelle pourrait présenter une partie annulaire à facettes concaves constituant les seconds miroirs associés aux seconds et troisièmes champs de vision 22 et 24 et une partie centrale convexe associée aux premiers champs de vision 20, les troisièmes champs de vision 24 passant entre ces parties annulaire et centrale de la coupelle. De plus, la partie centrale ci-dessus de la coupelle pourrait présenter un trou central pour le passage du quatrième champ de vision 25.

Bien d'autres variantes de l'invention sont possibles sans sortir du cadre défini par les revendications annexées.

## Revendications

1. Dispositif de détection et/ou démission de rayonnements, en particulier de rayonnements infrarouges, comprenant un élément de détection et/ou d'émission présentant un axe optique principal et un système de miroirs pour dévier les rayonnements entre des champs de vision et/ou d'éclairage et ledit élément via des couples de miroirs comprenant un premier miroir et un second miroir, les premiers miroirs étant optiquement placés respectivement entre les champs de vision et/ou d'éclairage associés et les seconds miroirs associés et les seconds miroirs étant optiquement placés respectivement entre l'élément de détection et/ou d'émission et les premiers miroirs associés ;
dans lequel à au moins un premier champ (20) de vision et/ou d'éclairage qui traverse au moins un plan de référence contenant ledit axe optique (6) et perpendiculaire au plan médian de ce champ de vision et à au moins un second champ (22) de vision et/ou d'éclairage qui ne traverse pas ce plan de référence, sont respectivement associés au moins un premier couple de miroirs (14, 19) et au moins un second couple de miroirs (16, 21), et dans lequel ledit premier couple de miroirs et ledit second couple de miroirs sont placés de part et d'autre dudit plan de référence et de telle sorte que ledit premier champ de vision et/ou d'éclairage et ledit second champ de vision et/ou d'éclairage passent entre les miroirs (16, 21) du second couple de miroirs ;
**caractérisé par le fait que** le système optique comprend une couronne intérieure (13) à facettes (14) constituant les premiers miroirs de couples de miroirs correspondant à des premiers champs de vision et/ou d'éclairage (20), une couronne extérieure (15) à facettes (16) constituant les premiers miroirs de couples de miroirs correspondant à des seconds champs de vision et/ou d'éclairage (22) et une couronne intermédiaire (17) à facettes (18) constituant les premiers miroirs de couples de miroirs placés respectivement du même côté dudit plan de référence que ledit premier couple de miroirs et correspondant à des troisièmes champs de vision et/ou d'éclairage (24) qui traversent respectivement ledit plan de référence ; lesdites couronnes étant placées à la périphérie dudit élément de détection et/ou d'émission (5);
que le système optique comprend une coupelle (9) placée en avant dudit élément de détection et/ou d'émission (5) et desdites couronnes et constituant les seconds miroirs desdits couples de miroirs, cette coupelle présentant une ouverture centrale (12) formée en face dudit élément de détection et/ou d'émission (5) et traversée par l'axe optique principal (6) de cet élément, que lesdits premiers et second champs de vision et/ou d'éclairage (20, 22) passent à l'extérieur de ladite coupelle (9) et les troisièmes champs de vision et/ou d'éclairage (24) passent au travers de ladite ouverture centrale (12) de ladite coupelle (9) ;
et que les zones de déflection de la face concave réfléchissante de ladite coupelle correspondant aux seconds miroirs (19, 21, 24) desdits premiers, seconds et troisièmes couples de miroirs sont respectivement annulaires, la zone annulaire correspondant aux troisièmes couples de miroirs s'étendant entre une zone annulaire intérieure correspondant aux premiers couples de miroirs et une zone annulaire extérieure correspondant aux deuxièmes couples de miroirs.

2. Dispositif selon la revendication 1, **caractérisé par le fait que** lesdits premiers et troisièmes champs de vision et/ou d'éclairage passent devant ledit élément de détection et/ou d'émission.

3. Dispositif selon l'une des revendications 1 et 2, **caractérisé par le fait que** lesdits couples de miroirs présentent des plans de symétrie contenant ledit axe optique.

4. Dispositif selon l'une quelconque des revendications précédentes, **caractérisé par le fait que** lesdits premiers, seconds et troisièmes couples de miroirs sont placés de telle sorte que les champs de vision et/ou d'éclairage correspondants présentent des angles d'inclinaison différents par rapport audit axe optique.

5. Dispositif selon l'une quelconque des revendications précédentes, **caractérisé par le fait que** lesdits premiers couples de miroirs et lesdits troisièmes couples de miroirs sont placés de telle sorte que les angles d'inclinaison desdits premiers champs de vision et/ou d'éclairage par rapport respectivement audit plan de référence sont plus grands que ceux desdits troisièmes champs de vision et/ou d'éclairage.

6. Dispositif selon l'une quelconque des revendications précédentes, **caractérisé par le fait que** lesdites couronnes (13, 15, 17) sont adjacentes et forment une pièce unique.

7. Dispositif selon l'une quelconque des revendications précédentes, **caractérisé par le fait que** lesdites couronnes sont fixées sur une face avant d'une plaque (3) portant ledit élément de détection et/ou d'émission.

8. Dispositif selon l'une quelconque des revendications précédentes, **caractérisé par le fait que** lesdites couronnes présentent des secteurs à facettes, les secteurs à facettes des première et troisième couronnes étant adjacents et le secteur à facettes de la deuxième couronne leur étant diamétralement opposé, de façon à obtenir des champs de vision et/ou d'éclairage s'étendant entre deux plans contenant ledit axe optique principal dudit élément de détection et/ou d'émission.

9. Dispositif selon l'une quelconque des revendications précédentes, **caractérisé par le fait que** ladite coupelle comprend des couronnes de facettes constituant lesdits seconds miroirs desdits couples de miroirs.

10. Dispositif selon l'une quelconque des revendications précédentes, **caractérisé par le fait que** lesdits couples de miroirs sont adaptés pour focaliser des champs de vision vers un élément de détection de rayonnement infrarouge.

11. Dispositif selon l'une quelconque des revendications précédentes, **caractérisé par le fait qu'**il comprend un écran (26) placé en avant du système de miroirs (7), qui présente des ouvertures (27, 28) traversées par lesdits champs de vision et/ou d'éclairage.

12. Dispositif selon la revendication 11, **caractérisé par le fait que** ledit écran est en forme de dôme, son bord périphérique étant fixé sur une plaque portant ledit élément de détection et/ou d'émission.

13. Dispositif selon l'une des revendications 11 et 12, **caractérisé par le fait qu'**il comprend au moins une pastille-écran (31, 32) amovible adaptée pour être installée sur ledit écran de façon à obstruer sélectivement au moins une desdites ouvertures de cet écran.

## Claims

1. Device for detecting and/or emitting radiation, in particular infrared radiation, comprising a detection and/or emission element having a main optical axis and a system of mirrors for deflecting the radiation between fields of view and/or of illumination and said element via pairs of mirrors comprising a first mirror and a second mirror, the first mirrors being optically placed respectively between the associated fields of view and/or of illumination and the associated second mirrors, and the second mirrors being optically placed respectively between the detection and/or emission element and the associated first mirrors, in which at least a first field of view (20) and/or of illumination which passes through at least one reference plane containing said optical axis (6) and is perpendicular to the mid-plane of this field of view and/or to at least a second field of view (22) and/or of illumination, which does not pass through this reference plane, are respectively associated with at least a first pair of mirrors (14, 19) and at least a second pair of mirrors (16, 21), and in which said first pair of mirrors and said second pair of mirrors are placed on either side of said reference plane and in such a way that said first field of view and/or of illumination and said second field of view and/or of illumination pass between the mirrors (16, 21) of the second pair of mirrors,
**characterized in that** the optical system includes an inner ring (13) having facets (14) constituting the first mirrors of the pairs of mirrors corresponding to first fields of view and/or of illumination (20), an outer ring (15) having facets (16) constituting the first mirrors of the pairs of mirrors corresponding to second fields of view and/or of illumination (22) and an intermediate ring (17) having facets (18) constituting the first mirrors of the pairs of mirrors placed respectively on the same side of said plane of reference as said first pair of mirrors and corresponding to third fields of view and/or of illumination (24) that pass respectively through said reference plane, said rings being placed on the periphery of said detection and/or emission element (5), **in that** the optical system includes a dish (9) placed in front of said detection and/or emission element (5) and of said rings and constituting the second mirrors of said pairs of mirrors, this dish having a central aperture (12) formed facing said detection and/or emission element (5) and through which the main optical axis (6) of this element passes, **in that** said first and second fields of view and/or of illumination (20, 22) pass to the outside of said dish (9) and the third fields of view and/or of illumination (24) pass through said central aperture (12) of said dish (9);
and **in that** the deflection zones of the reflective concave face of said dish corresponding to the second mirrors (19, 21, 24) of said first, second and third pairs of mirrors are respectively annular, the annular zone corresponding to the third pairs of mirrors extending between an inner annular zone corresponding to the first pairs of mirrors and an outer annular zone corresponding to the second pairs of mirrors.

2. Device according to Claim 1, **characterized in that** said first and third fields of view and/or of illumination pass in front of said detection and/or emission element.

3. Device according to either of Claims 1 and 2, **characterized in that** said pairs of mirrors have planes of symmetry containing said optical axis.

4. Device according to any one of the preceding claims, **characterized in that** said first, second and third pairs of mirrors are placed in such a way that the corresponding fields of view and/or of illumination have different angles of inclination to said optical axis.

5. Device according to any one of the preceding claims, **characterized in that** said first pairs of mirrors and said third pairs of mirrors are placed in such a way that the angles of inclination of said first fields of view and/or of illumination to said reference plane respectively are larger than those of said third fields of view and/or of illumination.

6. Device according to any one of the preceding claims, **characterized in that** said rings (13, 15, 17) are adjacent and form a single component.

7. Device according to any one of the preceding claims, **characterized in that** said rings are fastened to a front face of a plate (3) bearing said detection and/or emission element.

8. Device according to any one of the preceding claims, **characterized in that** said rings have facetted sectors, the facetted sectors of the first and third rings being adjacent and the facetted sector of the second ring being diametrically opposed thereto, so as to obtain fields of view and/or of illumination lying between two planes containing said main optical axis of said detection and/or emission element.

9. Device according to any one of the preceding claims, **characterized in that** said dish comprises rings of facets constituting said second mirrors of said pairs of mirrors.

10. Device according to any one of the preceding claims, **characterized in that** said pairs of mirrors are designed to focus fields of view onto an infrared radiation detection element.

11. Device according to any one of the preceding claims, **characterized in that** it includes a screen (26) placed in front of the system of mirrors (7), which screen has apertures (27, 28) through which said fields of view and/or of illumination pass.

12. Device according to Claim 11, **characterized in that** said screen is in the form of a dome, its peripheral edge being fastened to a plate bearing said detection and/or emission element.

13. Device according to either of Claims 11 and 12, **characterized in that** it includes at least one removable screen insert (31, 32) designed to be installed on said screen so as to selectively obstruct at least one of said apertures of this screen.

## Patentansprüche

1. Vorrichtung zur Erfassung und/oder zur Emission von Strahlungen, insbesondere von Infrarotstrahlungen, die ein Erfassungs- und/oder Emissionselement mit einer optischen Hauptachse und mit einem Spiegelsystem aufweist, um die Strahlungen zwischen Sicht- und/oder Beleuchtungsfeldern und dem Element über Paare von Spiegeln abzulenken, die einen ersten Spiegel und einen zweiten Spiegel aufweisen, wobei die ersten Spiegel optisch je zwischen den zugeordneten Sicht- und/oder Beleuchtungsfeldern und den zweiten zugeordneten Spiegeln angeordnet, und die zweiten Spiegel optisch je zwischen dem Erfassungs- und/oder Emissionselement und den ersten zugeordneten Spiegeln angeordnet sind;
wobei mindestens einem erstes Sicht- und/oder Beleuchtungsfeld (20), das mindestens eine Bezugsebene durchquert, die die optische Achse (6) enthält und lotrecht zur Mittelebene dieses Sicht- und/oder Beleuchtungsfelds liegt, und mindestens einem zweiten Sicht- und/oder Beleuchtungsfeld (22), das diese Bezugsebene nicht durchquert, mindestens ein erstes Paar von Spiegeln (14, 19) bzw. mindestens ein zweites Paar von Spiegeln (16, 21) zugeordnet sind, und wobei das erste Paar von Spiegeln und das zweite Paar von Spiegeln zu beiden Seiten der Bezugsebene und so angeordnet sind, dass das erste Sicht- und/oder Beleuchtungsfeld und das zweite Sicht- und/oder Beleuchtungsfeld zwischen den Spiegeln (16, 21) des zweiten Paars von Spiegeln durchgehen;
**dadurch gekennzeichnet, dass** das optische System einen inneren Kranz (13) mit Facetten (14), die die ersten Spiegel von Paaren von Spiegeln bilden, die ersten Sicht- und/oder Beleuchtungsfeldern (20) entsprechen, einen äußeren Kranz (15) mit Facetten (16), die die ersten Spiegel von Paaren von Spiegeln bilden, die zweiten Sicht- und/oder Beleuchtungsfeldern (22) entsprechen, und einen Zwischenkranz (17) mit Facetten (18) aufweist, die die ersten Spiegel von Paaren von Spiegeln bilden, die je auf der gleichen Seite der Bezugsebene wie das erste Paar von Spiegeln angeordnet sind und dritten Sicht- und/oder Beleuchtungsfeldern (24) entsprechen, die die Bezugsebene durchqueren;
wobei die Kränze am Umfang des Erfassungs- und/oder Emissionselements (5) angeordnet sind;
dass das optische System eine Schale (9) aufweist, die vor dem Erfassungs- und/oder Emissionselement (5) und den Kränzen angeordnet ist und die zweiten Spiegel der Paare von Spiegeln bildet, wobei diese Schale eine zentrale Öffnung (12) aufweist, die gegenüber dem Erfassungs- und/oder Emissionselement (5) geformt ist und von der optischen Hauptachse (6) dieses Elements durchquert wird, dass die ersten und zweiten Sicht- und/oder Beleuchtungsfelder (20, 22) außerhalb der Schale (9) verlaufen und die dritten Sicht- und/oder Beleuchtungsfelder (24) die zentrale Öffnung (12) der Schale (9) durchqueren;
und dass die Ablenkzonen der konkaven reflektierenden Seite der Schale, die den zweiten Spiegeln (19, 21, 24) der ersten, zweiten und dritten Paare von Spiegeln entspricht, ringförmig sind, wobei die den dritten Paaren von Spiegeln entsprechende Ringzone sich zwischen einer inneren Ringzone, die den ersten Paaren von Spiegeln entspricht, und einer äußeren Ringzone erstreckt, die den zweiten Paaren von Spiegeln entspricht.

2. Vorrichtung nach Anspruch 1, **dadurch gekennzeichnet, dass** die ersten und dritten Sicht- und/oder Beleuchtungsfelder vor dem Erfassungs- und/oder Emissionselement vorbeigehen.

3. Vorrichtung nach einem der Ansprüche 1 und 2, **dadurch gekennzeichnet, dass** die Paare von Spiegeln Symmetrieebenen aufweisen, die die optische Achse enthalten.

4. Vorrichtung nach einem der vorhergehenden Ansprüche, **dadurch gekennzeichnet, dass** die ersten, zweiten und dritten Paare von Spiegeln so angeordnet sind, dass die entsprechenden Sicht- und/oder Beleuchtungsfelder unterschiedliche Neigungswinkel bezüglich der optischen Achse aufweisen.

5. Vorrichtung nach einem der vorhergehenden Ansprüche, **dadurch gekennzeichnet, dass** die ersten Paare von Spiegeln und die dritten Paare von Spiegeln so angeordnet sind, dass die Neigungswinkel der ersten Sicht- und/oder Beleuchtungsfelder bezüglich der Bezugsebene größer sind als diejenigen der dritten Sicht- und/oder Beleuchtungsfelder.

6. Vorrichtung nach einem der vorhergehenden Ansprüche, **dadurch gekennzeichnet, dass** die Kränze (13, 15, 17) einander benachbart sind und ein einziges Bauteil bilden.

7. Vorrichtung nach einem der vorhergehenden Ansprüche, **dadurch gekennzeichnet, dass** die Kränze auf einer Vorderseite einer Platte (3) befestigt sind, die das Erfassungs- und/oder Emissionselement trägt.

8. Vorrichtung nach einem der vorhergehenden Ansprüche, **dadurch gekennzeichnet, dass** die Kränze Facettensektoren aufweisen, wobei die Facettensektoren des ersten und des dritten Kranzes benachbart sind und der Facettensektor des zweiten Kranzes ihnen diametral gegenüberliegt, um Sicht- und/oder Beleuchtungsfelder zu erhalten, die sich zwischen zwei Ebenen erstrecken, die die optische Hauptachse des Erfassungs- und/oder Emissionselements enthalten.

9. Vorrichtung nach einem der vorhergehenden Ansprüche, **dadurch gekennzeichnet, dass** die Schale Kränze von Facetten aufweist, die die zweiten Spiegel der Paare von Spiegeln bilden.

10. Vorrichtung nach einem der vorhergehenden Ansprüche, **dadurch gekennzeichnet, dass** die Paare von Spiegeln geeignet sind, um Sichtfelder zu einem Element zur Erfassung von Infrarotstrahlung zu fokussieren.

11. Vorrichtung nach einem der vorhergehenden Ansprüche, **dadurch gekennzeichnet, dass** sie eine vor dem Spiegelsystem (7) angeordnete Abschirmung (26) aufweist, die Öffnungen (27, 28) besitzt, die von den Sicht- und/oder Beleuchtungsfeldern durchquert werden.

12. Vorrichtung nach Anspruch 11, **dadurch gekennzeichnet, dass** die Abschirmung die Form einer Kuppel hat, wobei ihr Umfangsrand an einer Platte befestigt ist, die das Erfassungs- und/oder Emissionselement trägt.

13. Vorrichtung nach einem der Ansprüche 11 und 12, **dadurch gekennzeichnet, dass** sie mindestens ein entfernbares Abschirmungsplättchen (31, 32) aufweist, das geeignet ist, um auf der Abschirmung so angeordnet zu werden, dass es selektiv mindestens eine der Öffnungen dieser Abschirmung verdeckt.
